# EUROPÄISCHE PATENTANMELDUNG

(11) **EP 0 682 185 A1**
(43) Veröffentlichungstag der Anmeldung: **15.11.1995**
(21) Anmeldenummer: 95103623.5
(22) Anmeldetag: 14.03.1995
(51) Int. Cl.: F16B 5/01, F16B 37/04

(54) **Gewindeinsatz**

(30) Priorität: 02.04.1994 DE 4411519
(71) Anmelder: Schwarz Verbindungs-Systeme, D-71263 Weil der Stadt (DE)
(72) Erfinder: Schwarz, Helmut, D-71263 Weil der Stadt (DE)
(74) Vertreter: Brügel, Gerhard

(57) **Zusammenfassung**

Gewindeeinsätze werden in Platten, vorzugsweise Sandwichplatten eingeklebt und dienen zur Befestigung dieser Platten beispielsweise an Flugzeugrahmen oder anderer Teile an diesen Platten. Damit die Schrauben sich aus dem Gewinde nicht unbeabsichtigt lösen, sind die Gewinde gestaucht oder verjüngen sich. Das führt allerdings dazu, daß die Gewinde nach mehrmaligem Ein- und Ausschrauben unbrauchbar werden.

Um die Lebensdauer der Gewindeeinsätze zu verlängern, bestehen diese aus zwei Teilen, einem einzuklebenden Außenteil (1) und einem inneren Gewindeteil (9) das auswechselbar ist.
Vorzugsweise sind ein Hohlraum (5) im Außenteil (1) und das Gewindeteil (9) so geformt, daß sich das Gewindeteil (9) durch Einstecken und Drehen im Außenteil (1) verankern läßt.

Zweiteilige Gewindeeinsätze sind bekannt, allerdings ist hier das innere Gewindeteil seitlich verschiebbar, um Toleranzen auszugleichen. Auswechselbar ist das innere Gewindeteil hier nicht.

## Beschreibung

Die Erfindung betrifft einen Gewindeeinsatz wie er insbesondere zum Einsetzen in Platten, insbesondere sogenannte Sandwichplatten, verwendet wird. Solche Gewindeeinsätze werden in Ausfräsungen der Platte eingesetzt und mittels eines Klebstoffes, vorzugsweise eines Zweikomponentenkunststoffes in der Platte verankert. Gewindeeinsätze dienen dazu, z. B. eine Platte mit anderen Teilen, z. B. einem Flugzeugrahmen, zu verbinden oder andere Teile an einer Platte zu befestigen. Sandwichplatten bestehen meistens aus unteren und oberen Deckschichten und einer dazwischen liegenden bienenwabenförmig ausgebildeten Schicht. Da solche Verbindungen, insbesondere in Flugzeugen, Vibrationen ausgesetzt sind, sind, um ein Lösen der Schrauben zu verhindern, die Gewinde entweder punktförmig gestaucht, wie beispielsweise in DE 1202959 B2 beschrieben, oder konisch.

Gewindeeinsätze, die aus einem Außenteil und einem in dessen Innenöffnung angeordneten Gewindeeinsatz mit einem Innengewinde bestehen, sind beispielsweise durch die DE 11 09 457 B2, die DE 29 11 058 A1 oder die EP 0 415 505 A2 bekannt. Bei diesen bekannten Gewindeeinsätzen sind die Gewindeteile seitlich verschiebbar, um bei der Befestigung Toleranzen ausgleichen zu können.

Die DE 3537135 A1 befaßt sich mit Hammerschrauben, die an jeder beliebigen Stelle in eine Längsnut mit T-förmigem Querschnitt eingesteckt werden können und durch Drehen um 90° in ihre Betriebsstellung verbracht werden. Die in die Längsnut einzusetzende Hammermutter hat ein quaderförmiges Kopfteil, das so abgerundet ist, daß es eine Drehung spätestens sperrt, wenn zwei Kanten des Quaders an den Wandabschnitten der Längsnut anstoßen. Die Hammermutter erhält ihren festen Halt erst durch das Anziehen einer Schraube, nicht durch eine Vergußmasse. Ein Auswechseln der Hammerschrauben ist nicht beabsichtigt.

Die vorliegende Erfindung geht von einem zweiteiligen Gewindeeinsatz aus. Dabei ist es nicht Aufgabe der Erfindung Paßungenauigkeiten auszugleichen, weshalb das Gewindeteil auch nicht seitlich verschiebbar ist. Zweck der vorliegenden Erfindung ist vielmehr, den Gewindeeinsatz dessen Gewinde herkömmlich nach mehrmaliger Befestigung und Lösung, was beispielsweise für Reparaturen notwendig ist, schnell verschleißt, auf einfachste Weise reparieren zu können und ihm damit eine lange Lebensdauer zu verleihen.

Die Erfindung ist durch das kennzeichnende Merkmal des Patentanspruches 1 definiert, wonach das Gewindeteil auswechselbar sein soll. Vorzugsweise sind ein Hohlraum im Außenteil und das Gewindeteil so geformt, daß sich das Gewindeteil durch Einstecken und Drehen im Außenteil verankern läßt. Weitere Ausgestaltungen der Erfindung sind in den Unteransprüchen definiert. Neben der einfachen Reparatur bietet die Erfindung den Vorteil, in einem standardisierten Außenteil Gewindeteile mit verschiedenartigen Gewinden verwenden zu können.

Unter der Bezeichnung HeliCoil sind Gewindeeinsätze der Firma Böllhoff bekannt, die aus einer Drahtspirale bestehen und für den Einsatz in Werkstoffen geringer Festigkeit gedacht sind. Diese Gewindeeinsätze können auch zur Reparatur beschädigter Gewinde benutzt werden, wobei der Gewindeeinsatz eingeschraubt wird, nachdem vorher das alte verschlissene Gewinde erweitert worden ist.

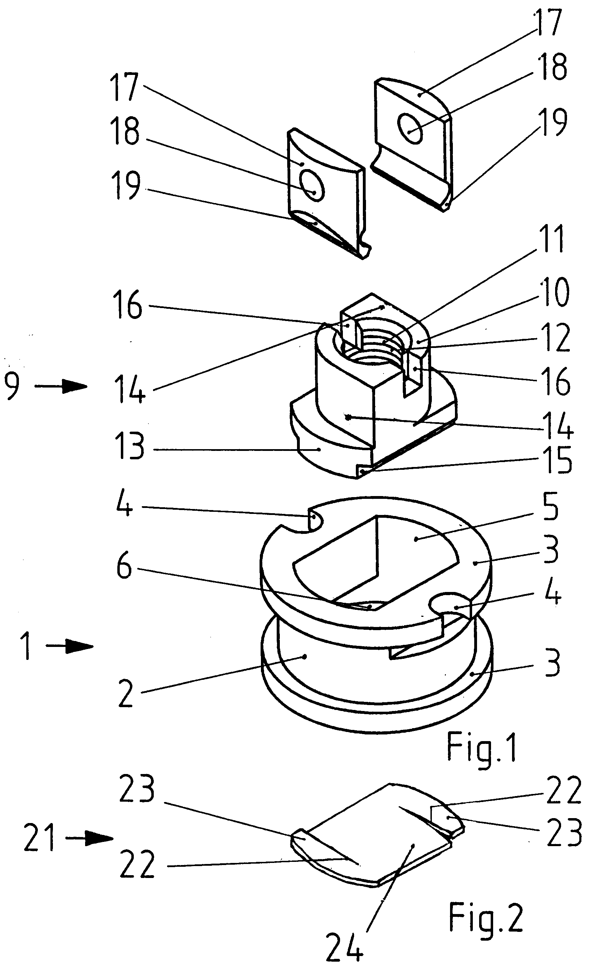

Nachfolgend soll die Erfindung anhand der Zeichnungen näher erläutert werden. Fig. 1 zeigt ein bevorzugtes Ausführungsbeispiel eines Gewindeeinsatzes gemäß der Erfindung. Die Fig. 2 zeigt eine weitere Möglichkeit der Verriegelung.

Fig. 1 ist eine perspektivische Explosionszeichnung. Ein Außenteil 1 weist ein zylindrisches Teil 2 mit zwei Flanschen 3 auf. Das zylindrische Teil 2 kann Längsrippen aufweisen, die es gegen Verdrehen sichern. Das Außenteil 1 wird in eine Bohrung der Platte eingesetzt, die weiter als das Außenteil 1 ist. Zur Befestigung des Außenteils in der Platte, wird durch die Löcher 4 ein Kleber, vorzugsweise ein Zweikomponentenkunststoff eingespritzt, der nach Verfestigung den Gewindeeinsatz in der Platte festhält.

Ein Gewindeteil 9 besteht aus einem Körper 10 mit linsenförmigem Querschnitt. Er weist eine Innenbohrung 11 auf, in die ein Gewinde 12 eingeschnitten ist. Die Innenbohrung 11 kann durchgehend sein, oder auch ein Sackloch. Das Gewinde 12 dient zur Aufnahme einer Schraube mit der die Platte an einem Rahmen oder dergleichen befestigt werden kann. Die Schraube kann auch zum Befestigen eines weiteren Teiles, z. B. eines Gehäuses an einer Platte benutzt werden. Der linsenförmige Querschnitt des Körpers 10 ergibt sich aus einem abgewandelten Quadrat, von dem zwei gegenüberliegende Ecken abgerundet sind. Weshalb diese Form gewählt wurde, wird später bei der Beschreibung des Einsetzens des Gewindeteils 9 in das Außenteil 1 verständlich. Das Gewindeteil 9 trägt an seinem unteren Ende zwei Nasen 13, die wie später noch erläutert wird, die Verankerung im Außenteil 1 bewirken.

Das Außenteil 1 hat einen inneren Hohlraum 5 dessen Querschnitt im oberen Bereich der Form des Gewindeteils 9 mit den Nasen 13 entspricht. Der untere Teil des inneren Hohlraumes 5 ist zu einem Hohlzylinder 6 erweitert, dessen Durchmesser, der maximalen Querabmessung des Gewindeteils 9 entspricht.

Das Gewindeteil 9 wird in der in Fig. 1 oben gezeigten Ausrichtung in den inneren Hohlraum 5 des Körpers 10 vollständig eingeschoben und danach um 90° nach rechts gedreht, bis die Flanken 14 des Körpers 10 des Gewindeteils 9 an den geraden Wänden des inneren Hohlraumes 5 des Außenteils 1 anschlagen und damit die weitere Drehung des Gewindeteils 9 begrenzen. Die Oberkanten der Nasen 13 liegen an der Oberkante des Hohlzylinders 6 des inneren Hohlraumes 5 an und verhindern somit ein Herausfallen des Gewindeteils 9 aus dem inneren Hohlraum 5 des Außenteils 1.

Das Außenteil 1 und das Gewindeteil 9 können aus Kunststoff oder Metall bestehen.

Um ein unbeabsichtigtes Lösen des Gewindeteils 9 zu verhindern, ist gemäß einer Weiterbildung der Erfindung eine Verriegelung vorgesehen. Diese Verriegelung kann, wie in Fig. 1 oben gezeigt, aus zwei Keilen 17 bestehen, die einen kreissegmentförmigen Querschnitt aufweisen, so daß sie in die nach Verdrehen des Gewindeeinsatzes um 90° noch freien Räume des inneren Hohlraumes 5 passen. Öffnungen 18 dienen zum Herausziehen der Keile 17 mittels eines Schraubendrehers oder ähnlichen Werkzeugs. Die Keile 17 weisen an ihren unteren Enden Nasen 19 auf, die sich in Ausfräsungen 15 des Gewindeteils 9 verhaken und damit ein unbeabsichtigtes Herausfallen der Keile 17 verhindern. Die Keile 17 bestehen vorzugsweise aus Kunststoff. Statt zweier Keile 17 ist auch ein Keil für die Verriegelung ausreichend. Die in Fig. 1 gezeigten beiden Keile können über einen Steg miteinander verbunden sein. Eine solche Ausbildung erleichtert das Einsetzen und Entfernen und macht die Öffnungen 18 entbehrlich.

Wie in Fig.1 Mitte zu sehen, sind an der Oberseite des Gewindeteils 9 schlitzartige Ausfräsungen 16 vorgesehen, die zum einen das Ein-und Ausdrehen des Gewindeteils 9 in das Außenteil 1 erleichtern und zum anderen das Herausziehen der Keile 17 mittels eines Schraubendrehers erleichtern.

Fig. 2 zeigt eine andere Alternative für die Verriegelung. In dieser Fig. ist perspektivisch eine vorgespannte Feder 21 mit zwei gegenüberliegenden Einschnitten 22 gezeigt. Die Vorspannung ist so gewählt, daß die äußeren Enden 23 gegenüber dem Mittelteil 24 nach oben gebogen sind. Die Feder ist beispielsweise bei der Ausführungsform der Fig. 1 verdrehsicher in den Boden des inneren Hohlraumes 5 des Außenteils 1 eingesetzt. Die Formgebung der Feder 21 ermöglicht eine Drehung des Innenteils 11 nach rechts, verhindert aber dessen Zurückdrehen, da die Ausfräsungen 15 an den Einschnitten 22 anstoßen. Ein Lösen dieser Verriegelung wird dadurch ermöglicht, daß mittels eines U-förmigen Werkzeugs die äußeren Enden 23 der Feder 21 nach unten gedrückt werden.

Als Verriegelung könnte auch ein U-förmiger Bügel verwendet werden, dessen Schenkel in Bohrungen von Außenteil und Gewindeteil eingesteckt sind und somit ein Lösen der Verbindung verhindern.

Die Befestigung des Gewindeteils in dem Außenteil könnte auch nach Art einer Bajonettverbindung ausgebildet sein, bei der innerer Hohlraum des Außenteils und Gewindeteil zylindrisch sind. Solche Bajonettverbindungen bestehen aus J-förmigen Führungen in der Innenwand des inneren Hohlraumes des Außenteils und in diese eingreifende Stifte an der Außenwand des Gewindeteils.

Typische Abmessungen der beschriebenen Vorrichtung sind: Höhe des Außenteils 1 10mm, Flanschdurchmesser des Außenteils 1 15mm, Gewinde 12 M4.

## Patentansprüche

1. Gewindeeinsatz, der aus einem in ein Bauteil, vorzugsweise eine Platte, einzuklebenden Außenteil (1) mit einem inneren Hohlraum (5) und in diesem befindlichen Gewindeteil (9) besteht, dadurch gekennzeichnet, daß das Gewindeteil (9) auswechselbar ist.

2. Gewindeeinsatz nach Anspruch 1, dadurch gekennzeichnet, daß der innere Hohlraum (5) des Außenteils (1) und das Gewindeteil (9) derart geformt sind, daß sich das Gewindeteil (9) nach Einschieben und anschließendem Drehen im Außenteil (1) verankert.

3. Gewindeeinsatz nach Anspruch 2, dadurch gekennzeichnet, daß das Gewindeteil (9) mit seitlichen Nasen (13) versehen ist und im Außenteil (1) ein in der Form dem Gewindeteil (9) entsprechender Hohlraum (5) vorgesehen ist, der in einen Hohlzylinder (6) übergeht in den die Nasen (13) nach Drehung des Gewindeteils (9) eingreifen.

4. Gewindeeinsatz nach Anspruch 2, dadurch gekennzeichnet, daß das Gewindeteil (9) über eine Bajonettverbindung mit dem Außenteil (1) verbunden ist.

5. Gewindeeinsatz nach einem der Ansprüche 1 bis 4, dadurch gekennzeichnet, daß ein Verriegelungselement (17, 21) vorgesehen ist, das ein ungewolltes Lösen des Gewindeteils (9) verhindert.

6. Gewindeeinsatz nach Anspruch 5, dadurch gekennzeichnet, daß das Verriegelungselement ein U-förmiger Bügel ist, dessen Schenkel in Bohrungen im Außenteil (1) und im Gewindeteil (9) einsteckbar sind.

7. Gewindeeinsatz nach Anspruch 3 und 5, dadurch gekennzeichnet, daß das Verriegelungselement eine im Boden eines den inneren Hohlraum des Außenteils bildenden Sackloches angeordnete bogenförmige Blattfeder (21) mit zwei schräg gegenüberliegenden Einschnitten (22) ist, und daß diese Blattfeder derart geformt und vorgespannt ist, daß sich die Unterkanten des Gewindeteils (9) nach Verdrehung in den Einschnitten (22) verhaken.

8. Gewindeeinsatz nach Anspruch 3 und 5, dadurch gekennzeichnet, daß das Verriegelungselement wenigstens ein Keil (17) ist, der die nach Einsetzen und Verdrehen des Gewindeteils (9) freibleibenden Bereiche des inneren Hohlraumes (5) ausfüllt.

9. Gewindeeinsatz nach Anspruch 8, dadurch gekennzeichnet, daß als Verriegelungselement zwei über einen Steg verbundene Keile (17) vorgesehen sind.

10. Gewindeeinsatz nach einem der Ansprüche 1 bis 9, dadurch gekennzeichnet, daß das Außenteil (1) aus Kunststoff oder Metall besteht.

11. Gewindeeinsatz nach einem der Ansprüche 1 bis 10, dadurch gekennzeichnet, daß das Gewindeteil (9) aus Kunststoff oder Metall besteht.

12. Gewindeeinsatz nach einem der Ansprüche 1 bis 11, dadurch gekennzeichnet, daß das Gewindeteil (9) an der Oberseite Ausfräsungen (16) zum Einsetzen eines Werkzeuges, z.B. eines Schraubendrehers aufweist.

13. Gewindeeinsatz nach einem der Ansprüche 1 bis 12, dadurch gekennzeichnet, daß das Innengewinde (12) des Gewindeteils (9) zur Sicherung einer eingeschraubten Schraube konisch oder an wenigstens einer Stelle gestaucht ist.
